# EUROPÄISCHE PATENTSCHRIFT

(11) **EP 3 669 996 B1**
(45) Veröffentlichungstag und Bekanntmachung des Hinweises auf die Patenterteilung: **24.01.2024**
(21) Anmeldenummer: 19215717.0
(22) Anmeldetag: 12.12.2019
(51) Int. Cl.: B05B 1/14, B05B 15/16, A01C 23/00

(54) **DÜSE ZUM AUSBRINGEN VON FLÜSSIGKEITEN UND LANDWIRTSCHAFTLICHE SPRITZVORRICHTUNG**
NOZZLE FOR DISPENSING LIQUIDS AND AGRICULTURAL SPRAYING DEVICE
BUSE DE DISTRIBUTION DES LIQUIDES ET DISPOSITIF DE PULVÉRISATION AGRICOLE

(30) Priorität: 21.12.2018 DE 102018222769
(43) Veröffentlichungstag der Anmeldung: 24.06.2020
(73) Patentinhaber: Lechler GmbH, 72555 Metzingen (DE)
(72) Erfinder: Rempp, Wolfgang, 70190 Stuttgart (DE); Heinkel, Dr. Robert, 72581 Dettingen/Erms (DE)
(74) Vertreter: Patentanwälte Ruff, Wilhelm, Beier, Dauster & Partner mbB

(56) Entgegenhaltungen:
- EP-A1- 3 280 538
- EP-A2- 1 954 356
- EP-B1- 1 416 785
- JP-A- 2008 238 021
- JP-A- 2013 108 460
- US-A1- 2006 144 966

## Beschreibung

Die Erfindung betrifft eine Düse zum Ausbringen von Flüssigkeiten, insbesondere Flüssigdünger, mit einem Gehäuse mit einem Flüssigkeitseinlass, einer Austrittskammer und mindestens einem ersten Austrittskanal, einem zweiten Austrittskanal und einem dritten Austrittskanal, wobei die Austrittskanäle von der Austrittskammer ausgehen, wobei eine Längsachse des ersten Austrittskanals in einer Mittelebene des Gehäuses liegt, wobei der zweite Austrittskanal in einem zweiten Winkel zur Mittelebene angeordnet ist, und wobei der dritte Austrittskanal in einem dritten, zum zweiten Winkel betragsmäßig gleichen aber vorzeichenmäßig verschiedenen Winkel zur Mittelebene angeordnet ist. Die Erfindung betrifft auch eine landwirtschaftliche Spritzvorrichtung mit mehreren erfindungsgemäßen Düsen.

Aus dem europäischen Patent EP 1 416 785 B1 ist eine Flüssigdüngerdüse bekannt, die ein Gehäuse mit einem Flüssigkeitseinlass, einer Austrittskammer und insgesamt fünf Austrittskanälen hat, die von der Austrittskammer ausgehen. Ein erster Austrittskanal ist auf der Mittellängsachse fluchtend zum Flüssigkeitseinlass angeordnet. Der erste Austrittskanal verläuft parallel zur Mittellängsachse des Gehäuses. Die Mittellängsachse der Austrittskammer liegt in einer Mittelebene des Gehäuses. Ein zweiter Austrittskanal ist in einem zweiten Winkel zur Mittelebene angeordnet und ein dritter Austrittskanal ist an einem dritten, zum zweiten Winkel betragsmäßig gleichen aber vorzeichenmäßig verschiedenen Winkel zur Mittelebene angeordnet. Ein vierter Austrittskanal ist in einem vierten Winkel zur Mittelebene angeordnet und ein fünfter Austrittskanal ist in einem fünften Winkel zur Mittelebene angeordnet, wobei der vierte und der fünfte Winkel betragsmäßig gleich aber vorzeichenmäßig verschieden sind und wobei der vierte und der fünfte Winkel größer sind als der zweite und der dritte Winkel. Ein freier Querschnitt des zweiten und des dritten Austrittskanals sind gleich, so dass also im Betrieb der Flüssigdüngerdüse aus dem zweiten Austrittskanal und dem dritten Austrittskanal gleiche Flüssigkeitsmengen ausgegeben werden. Auch der freie Querschnitt des vierten Austrittskanals und des fünften Austrittskanals sind gleich, so dass im Betrieb der Flüssigdüngerdüse aus dem vierten Austrittskanal und dem fünften Austrittskanal gleiche Flüssigkeitsmengen ausgegeben werden. Mit der Flüssigdüngerdüse werden also insgesamt fünf Sprühstrahlen ausgegeben, ein erster Sprühstrahl aus dem ersten Austrittskanal parallel zur Längsachse der Austrittskammer, ein zweiter und ein dritter Sprühstrahl mit gleichen Flüssigkeitsmengen und in betragsmäßig gleichen Winkeln zur Mittelebene und ein vierter und ein fünfter Sprühstrahl mit gleichen Flüssigkeitsmengen und betragsmäßig gleichen Winkeln zur Mittelebene.

Die europäische Offenlegungsschrift EP 3 280 538 A1 offenbart eine Düse für Druckluft und andere Gase, beispielsweise zum Fördern von Material oder Sortieraufgaben.

Die Düse weist eine zentrale Austrittsöffnung und mehrere, um die zentrale Austrittsöffnung herum angeordnete weitere Austrittsöffnungen auf. Die Austrittsöffnungen haben einen unterschiedlichen Durchmesser. Die zu den weiteren Austrittsöffnungen führenden Austrittskanäle können zu einer Mittellängsachse der Düse hin geneigt sein.

Aus der europäischen Offenlegungsschrift EP 1 954 356 A0 bzw. der zugehörigen WO 2007/065001 A2 ist eine Düse zum Ausgeben von Flüssigkeiten bekannt, die mehrere Austrittsöffnungen aufweist. Die mehreren Austrittsöffnungen sind um eine Mittellängsachse der Düse verteilt und weisen zur Mittellängsachse einen unterschiedlichen Austrittswinkel auf.

Aus der europäischen Patentschrift EP 1 416 785 B1 ist eine Düse zum Ausbringen von Flüssigkeiten bekannt, die fünf Austrittsöffnungen aufweist. Eine erste Austrittsöffnung ist zentral auf der Mittellängsachse angeordnet. Eine zweite Austrittsöffnung ist geneigt zur Mittellängsachse angeordnet und eine dritte Austrittsöffnung ist ebenfalls geneigt zur Mittellängsachse angeordnet. Der Winkel, um den die zweite und die dritte Austrittsöffnung zur Mittellängsachse geneigt sind, ist betragsmäßig gleich, weist aber ein unterschiedliches Vorzeichen auf. Die Querschnitte der zweiten und dritten Auslassöffnung sind gleich. Eine vierte Austrittsöffnung und eine fünfte Austrittsöffnung weisen gegenüber der zweiten und dritten Austrittsöffnung einen kleineren Querschnitt auf. Die vierte und die fünfte Austrittsöffnung sind gegenüber der Mittellängsachse um einen betragsmäßig gleichen Winkel geneigt, das Vorzeichen ist aber verschieden.

Aus der US-Offenlegungsschrift US 2006/0144966 A1 ist eine Düse zum Ausbringen von Flüssigkeiten, speziell Treibstoff, bekannt. Die Düse weist eine parallel zur Mittellängsachse angeordnete Austrittsöffnung und mehrere, um den Umfang eines zylindrischen Gehäuses der Düse verteilte weitere Austrittsöffnungen auf. Die über den Umfang des Gehäuses verteilten Austrittsöffnungen sind alle rechtwinklig zur Mittellängsachse ausgerichtet und weisen den gleichen Querschnitt auf.

Aus der japanischen Offenlegungsschrift JP 2013-108460 A ist eine Düse zum Ausbringen von Flüssigkeiten mit einem zylindrischen Gehäuse und mehreren, über den Umfang des zylindrischen Gehäuses verteilten Austrittsöffnungen bekannt. Die Düse ist dafür vorgesehen, in ein Abgasrohr eines Verbrennungsmotors vorzuragen. Das zylindrische Gehäuse soll dann parallel zur Strömungsrichtung in dem Abgasrohr angeordnet sein. Die Austrittsöffnungen können einen unterschiedlichen Querschnitt und unterschiedliche Winkel zur Mittellängsachse aufweisen.

Aus der japanischen Offenlegungsschrift 2008-238021 A ist eine Düse zum Ausbringen von Flüssigkeiten für landwirtschaftliche Zwecke bekannt. Das Düsengehäuse weist zwei Austrittsöffnungen auf, wobei die Austrittsöffnungen unterschiedlich groß sind. Eine erste Austrittsöffnung soll einen Sprühstrahl erzeugen, der in Fahrtrichtung einer Spritzvorrichtung geneigt ist, und die zweite Austrittsöffnung soll einen Sprühstrahl erzeugen, der entgegen der Fahrtrichtung geneigt ist. Zu einer Vertikalen sind die Winkel der beiden Sprühstrahlen unterschiedl ich.

Mit der Erfindung sollen eine Düse zum Ausbringen von Flüssigkeiten, insbesondere Flüssigdünger, und eine landwirtschaftliche Spritzvorrichtung hinsichtlich einer möglichst optimalen Verteilung der ausgegebenen Flüssigdüngermenge verbessert werden.

Hierzu ist eine Düse mit den Merkmalen von Anspruch 1 und eine landwirtschaftliche Spritzvorrichtung mit den Merkmalen von Anspruch 8 vorgesehen.

Erfindungsgemäß ist hierzu eine Düse mit einem Gehäuse mit einem Flüssigkeitseinlass, einer Austrittskammer und mindestens einem ersten Austrittskanal, einem zweiten Austrittskanal und einem dritten Austrittskanal vorgesehen, wobei die Austrittskanäle von der Austrittskammer ausgehen, wobei eine Längsachse des ersten Austrittskanals in einer Mittelebene des Gehäuses liegt, wobei der zweite Austrittskanal in einem zweiten Winkel zur Mittelebene angeordnet ist, wobei der dritte Austrittskanal in einem dritten, zum zweiten Winkel betragsmäßig gleichen aber vorzeichenmäßig verschiedenen Winkel zur Mittelebene angeordnet ist, bei der ein freier Querschnitt des zweiten Austrittskanals und ein freier Querschnitt des dritten Austrittskanals unterschiedlich sind, so dass im Betrieb der Düse aus dem zweiten Austrittskanal und dem dritten Austrittskanal unterschiedliche Flüssigkeitsmengen ausgegeben werden.

Überraschenderweise wurde festgestellt, dass die Erzeugung von Sprühstrahlen in einem betragsmäßig gleichen aber vorzeichenmäßig verschiedenen Winkel zur Mittelebene, die unterschiedliche Flüssigkeitsmengen ausgeben, im Einsatz zu einer verbesserten Verteilung der durch die Sprühstrahlen ausgegebenen Flüssigkeitsmenge führt. Es wird vermutet, dass die erzeugten Sprühstrahlen zumindest teilweise und zumindest zeitweise auf Pflanzen oder Hindernisse und Unebenheiten am Boden auftreffen und dass die Vorteile der erfindungsgemäßen Düse bei solchen Gegebenheiten zum Tragen kommen.

In Weiterbildung der Erfindung sind ein vierter Austrittskanal und ein fünfter Austrittskanal vorgesehen, die von der Austrittskammer ausgehen, wobei der vierte Austrittskanal in einem vierten Winkel zur Mittelebene angeordnet ist, wobei der fünfte Austrittskanal in einem fünften Winkel zur Mittelebene angeordnet ist, wobei der vierte und der fünfte Winkel vom zweiten und dritten Winkel verschieden sind, wobei der vierte und fünfte Winkel betragsmäßig gleich aber vorzeichenmäßig verschieden sind und wobei ein freier Querschnitt des vierten Austrittskanals und ein freier Querschnitt des fünften Austrittskanals unterschiedlich sind, so dass im Betrieb der Düse aus dem vierten Austrittskanal und dem fünften Austrittskanal unterschiedliche Flüssigkeitsmengen ausgegeben werden.

In Weiterbildung der Erfindung sind der freie Querschnitt des zweiten Austrittskanals und der freie Querschnitt des vierten Austrittskanals gleich und der freie Querschnitt des dritten Austrittskanals und der freie Querschnitt des fünften Austrittskanals sind gleich, so dass im Betrieb der Düse aus dem zweiten Austrittskanal und dem vierten Austrittskanal gleiche Flüssigkeitsmengen ausgegeben werden und dass aus dem dritten Austrittskanal und dem fünften Austrittskanal gleiche Flüssigkeitsmengen ausgegeben werden.

Auf diese Weise wird eine optimale Verteilung der ausgegebenen Flüssigkeitsmenge erreicht. Spritzstrahlen, die unter dem betragsmäßig gleichen Winkel zur Mittelebene austreten, geben unterschiedliche Flüssigkeitsmengen aus. Der Spritzstrahl, der unter dem zweiten Winkel austritt, gibt aber die gleiche Flüssigkeitsmenge aus wie der Spritzstrahl, der unter dem vierten Winkel, der verschieden vom zweiten Winkel ist, austritt. Der dritte Sprühstrahl gibt die gleiche Flüssigkeitsmenge aus wie der fünfte Sprühstrahl, der unter einem anderen Winkel als der dritte Sprühstrahl zur Mittelebene austritt. Links und rechts der Mittelebene werden in der Summe aber gleiche Flüssigkeitsmengen ausgegeben.

In Weiterbildung der Erfindung ist in der Austrittskammer eine Blende mit wenigstens einer Durchtrittsöffnung angeordnet und der Beginn des ersten Austrittskanals ist gegenüber der Durchtrittsöffnung in Strömungsrichtung durch die Austrittskammer gesehen versetzt.

Durch die Blende wird eine Einstellung der durch die erfindungsgemäße Düse insgesamt ausgegebenen Flüssigkeitsmenge erzielt. Der Versatz der Durchtrittsöffnung in der Blende in Strömungsrichtung gesehen zu dem Beginn des ersten Austrittskanals verhindert das sogenannte Durchschießen des durch die Durchtrittsöffnung in der Blende erzeugten Flüssigkeitsstrahls, mit anderen Worten wird also verhindert, dass der Flüssigkeitsstrahl direkt von der Durchtrittsöffnung in der Blende in den ersten Austrittskanal eintritt. Vielmehr trifft der durch die Blende erzeugte Flüssigkeitsstrahl am Boden der Austrittskammer neben dem Beginn des ersten Austrittskanals auf, so dass eine gleichmäßige Verteilung der ausgegebenen Flüssigdüngermenge über die mehreren Austrittskanäle der Düse gewährleistet ist.

Gemäß der Erfindung sind alle Austrittskanäle, senkrecht zur Mittelebene gesehen, um einen sechsten Winkel zwischen 4° und 10°, insbesondere 7°, gegenüber der Mittellängsachse des Gehäuses geneigt.

Ein Flüssigkeitsaustritt aus der Düse erfolgt dadurch schräg, insbesondere schräg nach hinten, so dass die Flüssigkeitsstrahlen im Fahrbetrieb einer mit den Düsen ausgerüsteten landwirtschaftlichen Spritzvorrichtung vertikal auf dem Boden auftreffen.

Gemäß der Erfindung sind alle Austrittskanäle in Bezug auf die vorgesehene Bewegungsrichtung um den sechsten Winkel nach hinten geneigt.

Dadurch ist sichergestellt, dass im Fahrbetrieb einer mit den erfindungsgemäßen Düsen ausgerüsteten landwirtschaftlichen Spritzvorrichtung die erzeugten Sprühstrahlen im Wesentlichen senkrecht auf dem Boden ankommen. Der sechste Winkel wird dabei in Abhängigkeit eines Abstands der Düsen über dem Erdboden und in Abhängigkeit einer üblichen Fahrgeschwindigkeit einer landwirtschaftlichen Spritzvorrichtung eingestellt.

In Weiterbildung der Erfindung ist das Gehäuse an seinem unteren Ende, an dem die Austrittskanäle in die Umgebung münden, mit einem in einer vorgesehenen Bewegungsrichtung vorne liegenden Vorsprung versehen, der etwa in Richtung der Mittellängsachse der Austrittskammer von dem Gehäuse abragt.

Durch einen solchen Vorsprung wird eine Nase am Gehäuse gebildet, die die Austrittsöffnungen, also die Enden der Austrittskanäle, aus denen die erzeugten Sprühstrahlen austreten, vor zurückschlagenden Pflanzen und damit vor Verschmutzung und Beschädigung schützt. Das Gehäuse kann darüber hinaus mit einer Markierung der vorgesehenen Fahrtrichtung versehen sein, beispielsweise eine Pfeilmarkierung für die Fahrtrichtung.

In Weiterbildung der Erfindung ist ein Querschnitt wenigstens eines der Austrittskanäle elliptisch.

Wenn größere Volumenströme ausgegeben werden sollen, hat sich das Vorsehen von Austrittskanälen mit wenigstens abschnittsweise elliptischem Querschnitt als vorteilhaft herausgestellt.

In Weiterbildung der Erfindung ist eine längere Halbachse der Ellipse parallel zu der vorgesehenen Bewegungsrichtung der Flüssigdüngerdüse angeordnet.

Auf diese Weise wird ein Spritzstrahl mit elliptischem Querschnitt erzeugt, der aber quer zur vorgesehenen Bewegungsrichtung nicht mehr Platz benötigt als ein von einer kreisrunden Austrittsöffnung ausgegebener Spritzstrahl. Dies ist insbesondere dann von großem Vorteil, wenn Flüssigdünger zwischen Reihen von Pflanzen ausgegeben werden soll. Die Flüssigkeit kann durch den elliptischen Querschnitt flächig ausgebracht werden aber dennoch ist die Benetzung von Blattflächen begrenzt.

Das der Erfindung zugrunde liegende Problem wird auch durch eine landwirtschaftliche Spritzvorrichtung mit mehreren erfindungsgemäßen Düsen gelöst, bei der die Austrittskanäle gegenüber einer Vorwärtsfahrrichtung der Spritzvorrichtung um einen sechsten Winkel zwischen 4° und 10°, insbesondere 7°, nach hinten geneigt sind.

Auf diese Weise kann erreicht werden, dass im Fahrbetrieb der landwirtschaftlichen Spritzvorrichtung mit üblicher Geschwindigkeit die Sprühstrahlen vertikal auf dem Boden auftreffen. Der Winkel wird dabei in Abhängigkeit der vorgesehenen Fahrgeschwindigkeit und in Abhängigkeit des vorgesehenen Abstands der Düsen über dem Erdboden gewählt.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen können dabei in beliebiger Weise miteinander kombiniert werden, ohne den durch den Anspruchssatz definierten

Rahmen der Erfindung zu überschreiten. Dies gilt auch für die Kombination von Einzelmerkmalen ohne andere Einzelmerkmale, mit denen sie im Zusammenhang beschrieben oder dargestellt sind. In den Zeichnungen zeigen:
- Fig. 1: eine Seitenansicht einer erfindungsgemäßen Düse gemäß einer ersten Ausführungsform,
- Fig. 2: eine Draufsicht auf die Düse der Fig. 1,
- Fig. 3: eine Ansicht der Düse der Fig. 1 von unten,
- Fig. 4: eine der Fig. 3 entsprechende, verkleinerte Ansicht der Düse der Fig. 1 von unten,
- Fig. 5: eine der Fig. 1 entsprechende Seitenansicht,
- Fig. 6: eine Ansicht auf die Schnittebene A-A in Fig. 4,
- Fig. 7: eine Ansicht auf die Schnittebene C-C in Fig. 5,
- Fig. 8: eine im Wesentlichen der Fig. 1 entsprechende, aber gegen den Uhrzeigersinn gekippte Ansicht der Düse der Fig. 1,
- Fig. 9: eine Ansicht auf den Schnittverlauf A-A in Fig. 8,
- Fig. 10: eine Ansicht der Düse der Fig. 1 von hinten, in Fig. 1 also von links,
- Fig. 11: eine Ansicht auf die Schnittebene B-B in Fig. 10,
- Fig. 12: eine gegenüber der Darstellung der Fig. 8 um 180° gedrehte Ansicht der Düse der Fig. 1,
- Fig. 13: eine Ansicht auf den Schnittverlauf C-C in Fig. 12,
- Fig. 14: eine Seitenansicht einer erfindungsgemäßen Düse gemäß einer zweiten Ausführungsform,
- Fig. 15: eine Draufsicht auf die Düse der Fig. 14;
- Fig. 16: eine Ansicht der Düse der Fig. 14 von unten;
- Fig. 17: eine der Fig. 16 entsprechende, verkleinerte Ansicht der Düse der Fig. 14 von unten,
- Fig. 18: eine der Ansicht der Fig. 15 entsprechende Ansicht der Düse der Fig. 14,
- Fig. 19: eine Ansicht auf die Schnittebene B-B in Fig. 17,
- Fig. 20: eine gegenüber der Ansicht der Fig. 14 entgegen dem Uhrzeigersinn gekippte Ansicht der Düse der Fig. 14,
- Fig. 21: eine Ansicht auf den Schnittverlauf D-D in Fig. 20,
- Fig. 22: eine Ansicht der Düse der Fig. 14 von hinten, in Fig. 14 also von links,
- Fig. 23: eine Ansicht auf die Schnittebene E-E in Fig. 22,
- Fig. 24: eine gegenüber der Darstellung der Fig. 20 um 180° gedrehte Ansicht der Düse der Fig. 14,
- Fig. 25: eine Ansicht auf den Schnittverlauf F-F in Fig. 24 und
- Fig. 26: eine Ansicht auf die Schnittebene F-F in Fig. 18.

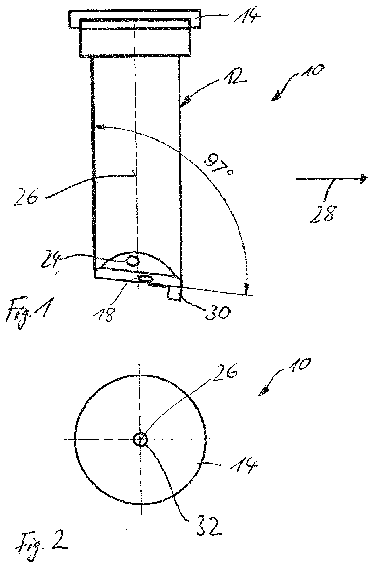

Fig. 1 zeigt eine erfindungsgemäße Düse 10 zum Ausbringen von Flüssigkeiten, insbesondere Flüssigdünger, gemäß einer ersten Ausführungsform der Erfindung. Die Düse 10 weist ein Gehäuse 12 auf, das einen in Fig. 1 nicht sichtbaren Flüssigkeitseinlass in einer Blende 14 aufweist, die auf das in Fig. 1 obere Ende des Gehäuses 12 aufgesetzt ist. In dem Gehäuse 12 ist eine in Fig. 1 nicht sichtbare Austrittskammer angeordnet.

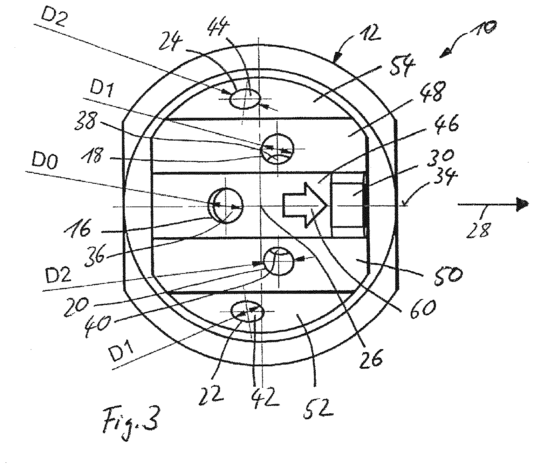

Von der Austrittskammer gehen insgesamt fünf Austrittskanäle aus, wobei in Fig. 1 lediglich zwei Austrittsöffnungen 18, 24, an denen die jeweiligen Austrittskanäle enden, zu erkennen sind, vgl. auch Fig. 3.

Die Austrittsöffnungen 18, 24 sind jeweils in einer schrägen Endfläche am unteren Ende des Gehäuses 12 angeordnet, wobei die Austrittsöffnung 18 in einer ersten schrägen Endfläche und die Austrittsöffnung 24 in einer weiteren schrägen Endfläche angeordnet sind, die jeweils in einem verschiedenen Winkel zu einer Längsachse 26 der Austrittskammer angeordnet sind. Eine Mittelebene des Gehäuses 12 liegt in Fig. 1 in der Zeichenebene. Die Mittelebene enthält die Längsachse 26 der Austrittskammer.

Am unteren Ende des Gehäuses ist in einer vorgesehenen Bewegungsrichtung 28 der Düse 10 vorne liegend ein Vorsprung 30 angeordnet. Wird also die Düse 10 an einer landwirtschaftlichen Spritzvorrichtung befestigt, so ist die vorgesehene Bewegungsrichtung während des Spritzbetriebs durch den Pfeil 28 vorgegeben. Der Vorsprung 30 bildet dann eine Nase, die in Fahrtrichtung vorne liegt und die dafür vorgesehen ist, die Austrittsöffnungen 18, 24 sowie auch die weiteren, in Fig. 1 nicht erkennbaren Austrittsöffnungen vor Verschmutzung und Beschädigung durch zurückschlagende Pflanzen zu schützen.

Fig. 2 zeigt eine Draufsicht auf die Düse 10 der Fig. 1. Zu erkennen ist die Blende 14 mit einer zentralen Durchtrittöffnung 32. Die Durchtrittsöffnung 32 bildet gleichzeitig den Flüssigkeitseinlass für die Austrittskammer im Gehäuse 12. Es fällt in der Fig. 2 auf, in der der Blick auf die Düse parallel zur Längsachse 26 der Austrittskammer erfolgt, dass durch die Durchtrittsöffnung 32 hindurch keine der insgesamt fünf Austrittsöffnungen 16 bis 24 zu erkennen ist, vgl. auch Fig. 3. Denn die erste Austrittsöffnung 16, deren zugeordneter Austrittskanal in einer Mittelebene 34 des Gehäuses 12 liegt, ist in Richtung der Längsachse 26 gesehen gegenüber der Durchtrittsöffnung 32 versetzt. Dadurch kann verhindert werden, dass im Betrieb der Düse 10 ein durch die Durchtrittsöffnung 32 erzeugter und in die Austrittskammer eintretender Flüssigkeitsstrahl durchschießt. Denn ein solcher Flüssigkeitsstrahl trifft auf eine untere Begrenzungswand der Austrittskammer auf, so dass das sogenannte Durchschießen und damit eine übermäßige Ausgabe von Flüssigkeit durch die erste Austrittsöffnung 16 vermieden wird.

Fig. 3 zeigt eine Ansicht der Düse 10 der Fig. 1 von unten.

Wie ausgeführt wurde, sind insgesamt fünf Austrittsöffnungen 16, 18, 20, 22 und 24 vorgesehen, die jeweils am Ende von Austrittskanälen angeordnet sind, wobei die Austrittskanäle wiederum von der Austrittskammer im Inneren des Gehäuses 12 ausgehen. Die erste Austrittsöffnung 16 ist am Ende eines ersten Austrittskanals 36 angeordnet. Der erste Austrittskanal 36 weist einen kreisrunden Querschnitt mit dem Durchmesser D0 auf. Die zweite Austrittsöffnung 18 ist am Ende eines zweiten Austrittskanals 38 angeordnet, der einen kreisrunden Querschnitt mit dem Durchmesser D1 aufweist. Die dritte Austrittsöffnung 20 ist am Ende eines dritten Austrittskanals 40 angeordnet, der einen kreisrunden Querschnitt mit einem Durchmesser D2 hat. Die vierte Austrittsöffnung 22 ist am Ende eines vierten Austrittskanals 42 angeordnet, der einen kreisrunden Querschnitt mit dem Durchmesser D1 hat. Die fünfte Austrittsöffnung 24 ist am Ende eines fünften Austrittskanals 44 angeordnet, der einen kreisrunden Querschnitt mit dem Durchmesser D2 hat.

Relativ zur Mittelebene 34 gesehen liegt die Längsachse des ersten Austrittskanals 36 in der Mittelebene 34. Bezogen auf die vorgesehene Bewegungsrichtung 28 Düse 10 ist die Längsachse des ersten Austrittskanals 36 zusätzlich um 7° nach hinten geneigt. Da der Blick in Fig. 3 parallel zur Längsachse 26 der Austrittskammer dargestellt ist und die vorgesehene Bewegungsrichtung 28 nach rechts zeigt, verläuft der erste Austrittskanal 36 in der Darstellung der Fig. 3 leicht schräg nach links.

Der zweite Austrittskanal 38 ist relativ zur Mittelebene 34 gesehen in einem zweiten Winkel zur Mittelebene 34 angeordnet. Darüber hinaus ist die Längsachse des zweiten Austrittskanals 38 ebenfalls um einen Winkel von 7° entgegen der vorgesehenen Bewegungsrichtung 28 geneigt. In der Darstellung der Fig. 3, also parallel zur Längsachse 26 der Austrittskammer gesehen, verläuft der zweite Austrittskanal daher schräg nach oben und leicht nach links.

Der dritte Austrittskanal 40 ist um einen dritten Winkel zur Mittelebene 34 geneigt und zusätzlich um 7° entgegen der vorgesehenen Bewegungsrichtung 28 nach hinten. Der dritte Winkel ist betragsmäßig gleich zu dem zweiten Winkel, vorzeichenmäßig aber verschieden. Die Längsachsen des ersten Austrittskanals 38 und des dritten Austrittskanals 40 sind somit symmetrisch zur Mittelebene 34 angeordnet. In der Darstellung der Fig. 3 verläuft der dritte Austrittskanal 40 somit nach unten und leicht nach links. Der zweite Austrittskanal 38 weist aber einen kreisrunden Querschnitt mit dem Durchmesser D1 auf, wohingegen der dritte Austrittskanal 40 einen kreisrunden Querschnitt mit dem Durchmesser D2 aufweist. Aus dem zweiten Austrittskanal 38 wird im Betrieb der Düse 10 also eine andere Flüssigkeitsmenge ausgegeben als aus dem dritten Austrittskanal 40. Bei der dargestellten Ausführungsform ist der Durchmesser D1 größer als der Durchmesser D2.

Eine Längsachse des vierten Austrittskanals 42 ist zur Mittelebene 34 um einen vierten Winkel geneigt, der größer ist als der dritte Winkel. Der vierte Austrittskanal 42 ist darüber hinaus um einen Winkel von 7° gegenüber der Längsachse 26 nach hinten, also entgegen der vorgesehenen Bewegungsrichtung 28 geneigt. In der Darstellung der Fig. 3 verläuft der vierte Austrittskanal 42 somit stark nach unten und leicht nach links. Der vierte Austrittskanal 42 weist einen kreisrunden Querschnitt mit dem Durchmesser D1 auf. Der Querschnitt des vierten Austrittskanals 42 entspricht also dem Querschnitt des zweiten Austrittskanals 38.

Der fünfte Austrittskanal 44 ist zur Mittelebene 34 um einen fünften Winkel geneigt und zusätzlich um einen Winkel von 7° zur Längsachse 26 entgegen der Bewegungsrichtung 28 geneigt. Der fünfte Winkel ist betragsmäßig gleich wie der vierte Winkel, aber vorzeichenmäßig verschieden. Die Längsachsen des vierten Austrittskanals 42 und des fünften Austrittskanals 44 sind somit symmetrisch zur Mittelebene 34 angeordnet. In der Darstellung der Fig. 3 verläuft der fünfte Austrittskanal 44 somit stark nach oben und leicht nach links. Der fünfte Austrittskanal 44 weist einen kreisrunden Querschnitt mit dem Durchmesser D2 auf. Der fünfte Austrittskanal 44 weist somit einen anderen freien Querschnitt als der vierte Austrittskanal 42 auf.

Im Betrieb der Düse 10 werden somit aus dem dritten Austrittskanal 42 und dem vierten Austrittskanal 44 unterschiedliche Flüssigkeitsmengen ausgegeben. Der freie Querschnitt des fünften Austrittskanals 44 ist gleich groß wie der freie Querschnitt des dritten Austrittskanals 40. Im Betrieb der Düse 10 werden somit aus dem dritten Austrittskanal 40 und dem fünften Austrittskanal 44 gleiche Flüssigkeitsmengen ausgeben. Auch aus dem zweiten Austrittskanal 38 und dem vierten Austrittskanal 42 werden gleiche Flüssigkeitsmengen ausgegeben. Der Durchmesser D0 ist größer als der Durchmesser D1 und größer als der Durchmesser D2. Der Durchmesser D1 ist größer als der Durchmesser D2.

Durch die erfindungsgemäße Düse 10 werden somit aus dem zweiten Austrittskanal 40 und dem fünften Austrittskanal 44 im Betrieb der Düse Sprühstrahlen mit gleichen Flüssigkeitsmengen ausgegeben. Diese beiden Sprühstrahlen sind aber in einem unterschiedlichen Winkel zur Mittelebene 34 angeordnet. Auch aus dem zweiten Austrittskanal 38 und dem vierten Austrittskanal 42 werden Sprühstrahlen mit gleichen Flüssigkeitsmengen ausgegeben, wenn die Düse 10 in Betrieb ist. Diese Sprühstrahlen werden aber in unterschiedlichen Winkeln zur Mittelebene 34 ausgegeben.

Die erste Austrittsöffnung 16 ist in einer ersten Endfläche 46 des Gehäuses 12 angeordnet, die senkrecht zur Mittelebene 34 angeordnet ist, aber um 7° gegenüber der Längsachse 26 geneigt ist. Wie in Fig. 1 eingezeichnet ist, ist die erste Endfläche 46 somit in einem Winkel von 97° zur Längsachse 26 angeordnet. Da auch der erste Austrittskanal 36 um 7° gegenüber der Längsachse geneigt ist, trifft der erste Austrittskanal 36 senkrecht auf die erste Endfläche 46.

Die zweite Austrittsöffnung 18 ist in einer zweiten Endfläche 48 des Gehäuses 12 angeordnet, die in dem zweiten Winkel geneigt zur Mittelebene 34 angeordnet ist. Zusätzlich ist die zweite Endfläche 48 um einen Winkel von 7° entgegen der vorgesehenen Bewegungsrichtung 28 und somit zur Längsachse 26 geneigt, siehe auch Fig. 1. Da auch die Längsachse des zweiten Austrittskanals 38 in dem zweiten Winkel zur Mittelebene 34 und um 7° zur Längsachse 26 geneigt angeordnet ist, trifft der zweite Austrittskanal 38 in einem rechten Winkel auf die zweite Endfläche 48.

Die dritte Austrittsöffnung 20 ist in einer dritten Endfläche 50 des Gehäuses 12 angeordnet. Die dritte Endfläche 50 ist um den dritten Winkel zur Mittelebene 34 und zusätzlich um 7° zur Längsachse 26 nach hinten geneigt. Der dritte Austrittskanal 40 trifft somit senkrecht auf die dritte Endfläche 50.

Die vierte Austrittsöffnung 22 ist in einer vierten Endfläche 52 des Gehäuses 12 angeordnet, die in dem vierten Winkel zur Mittelebene 34 und zusätzlich um 7° gegenüber der Längsachse 26 entgegen der Bewegungsrichtung 28 geneigt ist. Der vierte Austrittskanal 42 trifft somit senkrecht auf die vierte Endfläche 52.

Die fünfte Austrittsöffnung 24 ist in einer fünften Endfläche 54 des Gehäuses 12 angeordnet, die um den fünften Winkel zur Mittelebene 34 und zusätzlich um 7° zur Längsachse 26 entgegen der Bewegungsrichtung 28 geneigt ist. Der fünfte Austrittskanal 44 trifft somit senkrecht auf die fünfte Endfläche 54.

Alle Austrittskanäle 36, 38, 40, 42 und 44 treffen somit senkrecht auf die jeweils zugeordneten Endflächen 46, 48, 50, 52 und 54. Alle Austrittskanäle 36, 38, 40, 42, 44 weisen einen kreisrunden Querschnitt auf. Alle Austrittsöffnungen 16, 18, 20, 22, 24 sind somit kreisrund.

In der ersten Endfläche 46 ist eine Pfeilmarkierung 60 vorgesehen, die die vorgesehene Bewegungsrichtung 28 der Düse 10 anzeigt. An dem in der vorgesehenen Bewegungsrichtung 28 vorne liegenden Ende der ersten Endfläche 46 ist der Vorsprung 30 angeordnet.

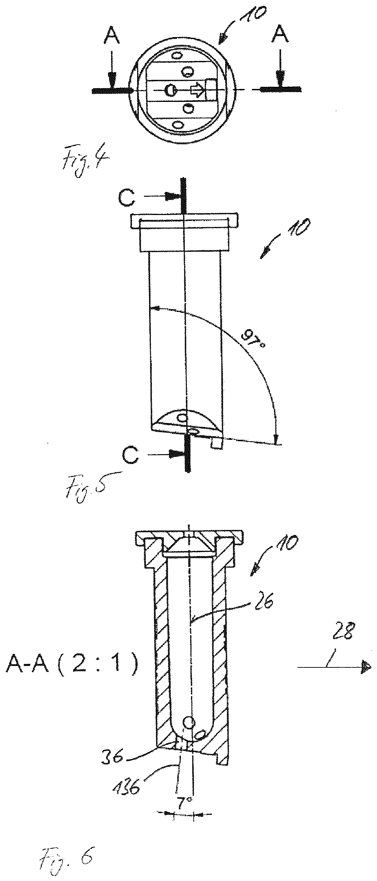

Die Darstellung der Fig. 4 zeigt eine der Fig. 3 entsprechende, verkleinerte Ansicht der Düse 10 der Fig. 1, wobei zusätzlich noch eine Schnittebene A-A eingezeichnet ist. Die Schnittebene A-A verläuft parallel zu einer vorgesehenen Bewegungsrichtung der Düse 10 im Spritzbetrieb einer mit der Düse 10 versehenen, selbstfahrenden Feldspritze oder an ein Zugfahrzeug angebauten oder angehängten Spritzeinrichtung, enthält die Mittellängsachse der Düse 10 und ist im Betrieb der Düse 10 senkrecht zu einer Bodenoberfläche angeordnet.

Fig. 5 zeigt eine der Fig. 1 entsprechende Ansicht der Düse 10, wobei zusätzlich eine Schnittebene C-C eingezeichnet ist. Die Schnittebene C-C verläuft senkrecht zu einer vorgesehenen Bewegungsrichtung der Düse 10 im Spritzbetrieb, enthält die Mittellängsachse der Düse 10 und ist im Betrieb der Düse 10 senkrecht zu einer Bodenoberfläche angeordnet.

Fig. 6 zeigt eine Ansicht auf die Schnittebene A-A in Fig. 4. Es ist in dieser Ansicht zu erkennen, dass eine Längsachse 136 des Austrittskanals 36 um 7° zur Mittellängsachse 26 der Düse 10 geneigt ist. Auch die Längsachsen der Austrittskanäle 38, 40, 42 und 44 sind zur Mittellängsachse 26 um 7° geneigt, und zwar in der gleichen Richtung wie die Längsachse 136 des Austrittskanals 36. Die aus den Austrittskanälen 36, 38, 40, 42, 44 bzw. den jeweils zugeordneten Austrittsöffnungen 16, 18, 20, 22, 24 austretenden Sprühstrahlen treten dadurch um 7° zur Vertikalen, die senkrecht zur Bodenoberfläche liegt, nach hinten geneigt, bezogen auf die vorgesehene Bewegungsrichtung 28, aus der Düse 10 aus. Dadurch kann erreicht werden, dass bei üblichen Fahrgeschwindigkeiten einer Feldspritze oder einer sonstigen landwirtschaftlichen Spritzvorrichtung, die mit Düsen 10 ausgerüstet ist, die erzeugten Sprühstrahlen im Wesentlichen senkrecht auf eine Bodenoberfläche auftreffen.

In Fig. 1 und Fig. 5 ist eingezeichnet, dass die Ebenen 46, 48, 50, 52 und 54, in denen die Austrittsöffnungen 16, 18, 20, 22 bzw. 24 angeordnet sind, um 97° zur Mittellängsachse 26 geneigt sind. Infolgedessen trifft die Längsachse 136 des Austrittskanals 36 und auch die Längsachsen der Austrittskanäle 38, 40, 42 und 44 senkrecht auf die jeweilige Ebene 46, 48, 50, 52 bzw. 54. Der erzeugte Sprühstrahl kann sich dadurch sauber und gleichmäßig von der jeweiligen Austrittsöffnung 16, 18, 20, 22 bzw. 24 ablösen und ist zur jeweiligen Längsachse 136 im Wesentlichen symmetrisch.

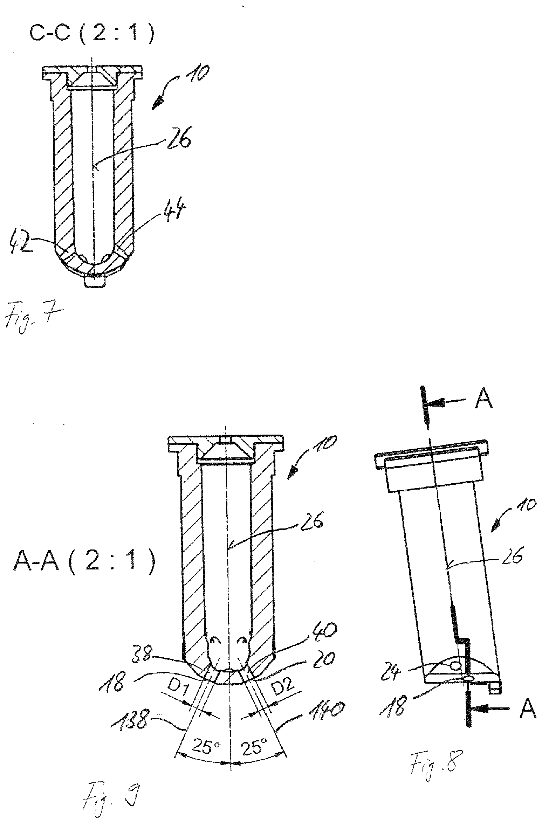

Fig. 7 zeigt eine Ansicht auf die Schnittebene C-C in Fig. 5. In dieser Schnittansicht sind abschnittsweise die beiden Austrittskanäle 42, 44 zu erkennen. Die Längsachsen der Austrittskanäle 42, 44 sind zur Mittellängsachse 26 der Flüssigdüngerdüse 10 um einen Winkel von ± 50° geneigt, wobei die Längsachsen der Austrittskanäle 42, 44 in Fig. 7 nicht dargestellt sind.

Fig. 8 zeigt eine Seitenansicht der Düse 10, die gegenüber der Seitenansicht der Fig. 5 um 7° gegen den Uhrzeigersinn gekippt wurde. Die Mittellängsachse 26 der Düse 10 verläuft in Fig. 8 also um 7° gegen den Uhrzeigersinn zur Vertikalen geneigt. In Fig. 8 ist ein Schnittverlauf A-A eingezeichnet, der zunächst so verläuft, dass die Schnittfläche bis kurz vor den Austrittsöffnungen 24, 18 so verläuft, dass sie die Mittellängsachse 26 enthält, dann aber eine Stufe aufweist und durch die Austrittsöffnung 18 sowie durch die in Fig. 8 nicht dargestellte Austrittsöffnung 20 parallel zu deren Längsachse verläuft.

Fig. 9 zeigt eine Ansicht auf den Schnittverlauf A-A in Fig. 8. Zu erkennen sind die Längsachsen 138, 140 der Austrittskanäle 38, 40. Diese Längsachsen 138, 140 sind in der Darstellung der Fig. 9 um +25° bzw. -25° zur Mittellängsachse 26 angeordnet. Wie bereits ausgeführt wurde, verläuft die Mittellängsachse 26 im montierten Zustand der Düse 10 etwa senkrecht zu einer Bodenoberfläche. Die Sprühstrahlen treten aus den Austrittsöffnungen 18, 20 also um 7° nach hinten geneigt sowie um +25 bzw. -25° seitlich ausgestellt aus den Austrittsöffnungen 18, 20 aus. Der Austrittskanal 38 weist den Durchmesser D1 auf, der größer ist als der Durchmesser D2 des Austrittskanals 40. Im Betrieb der Flüssigkeitsdüse 10 tritt also aus dem Austrittskanal 38 mehr Flüssigkeit aus als aus dem Austrittskanal 40. Das Sprühbild der Düse 10 ist somit nicht symmetrisch.

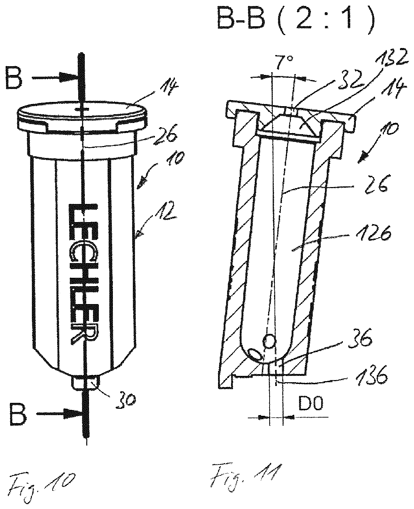

Die Darstellung der Fig. 10 zeigt die Düse 10 in einer Ansicht von hinten, so dass also der Blick in die vorgesehene Fahrtrichtung 28 geht, siehe Fig. 1. In der Darstellung der Fig. 1 erfolgt der Blick auf die Düse 10 damit von links. In Fig. 10 eingezeichnet ist eine Schnittebene B-B, die die Mittellängsachse 26 der Düse 10 enthält.

Fig. 11 zeigt eine Ansicht auf die Schnittebene B-B. Es ist zu erkennen, dass in der Darstellung der Fig. 11 die Mittellängsachse 26 um 7° im Uhrzeigersinn zur Vertikalen gekippt dargestellt ist. In Fig. 11 zu erkennen ist der Austrittskanal 36, dessen Längsachse 136 somit in Fig. 11 vertikal verläuft. Der Austrittskanal 136 weist einen kreisrunden Querschnitt mit dem Durchmesser D0 auf.

In der Darstellung der Fig. 11 ist auch die Ausbildung der Blende 14 genauer zu erkennen. Die Blende 14 weist die Durchtrittsöffnung 32 auf, die aber nur für ein kurzes Stück zylindrisch ausgebildet ist. Danach erweitert sich der Durchmesser des zugehörigen Durchtrittskanals schlagartig, so dass der Durchtrittskanal ausgehend von der Durchtrittsöffnung 32 in einer senkrecht zur Mittellängsachse 26 angeordneten Fläche mündet. Diese Fläche ist kreisförmig ausgebildet und diese Fläche ist die Deckfläche einer kegelstumpfförmigen Ausnehmung 132, die sich bis auf den Durchmesser der Austrittskammer 126 der Düse 10 erweitert. Die Austrittskammer 126 ist kreiszylindrisch ausgeführt und lediglich in ihrem in Fig. 11 unten liegenden Endbereich, von dem die Austrittskanäle, die zu den Austrittsöffnungen führen, ausgehen, halbkugelförmig ausgebildet.

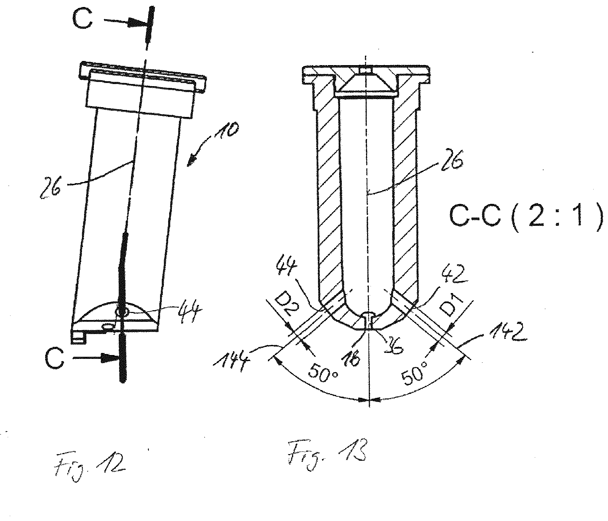

Fig. 12 zeigt eine Seitenansicht der Düse 10, wobei die Mittellängsachse 26 der Düse 10 gegenüber der Ansicht der Fig. 1 und der Fig. 5 um 7° im Uhrzeigersinn von der Vertikalen weg gekippt ist.

Ebenfalls eingezeichnet ist in Fig. 12 ein Schnittverlauf C-C, der zunächst so verläuft, dass er die Mittellängsachse 26 enthält, dann aber um 7° abknickt, so dass er die Längsachsen des Austrittskanals 44 und des Austrittskanals 42 enthält.

Fig. 13 zeigt eine Ansicht auf den Schnittverlauf C-C in Fig. 12. Zu erkennen ist abschnittsweise der Austrittskanal 36 mit der zugeordneten Austrittsöffnung 16 sowie die Austrittskanäle 44, 42 mit den zugeordneten Längsachsen 144 bzw. 142. Die Längsachsen 144, 142 der Austrittskanäle 44, 42 sind um +50° bzw. -50° zur Mittellängsachse 26 geneigt. Der Austrittskanal 44 hat einen kreisförmigen Querschnitt mit einem Durchmesser D2. Der Austrittskanal 42 hat einen kreisförmigen Querschnitt mit dem Durchmesser D1, wobei D1 größer D2 ist. Der Austrittskanal 36 hat einen kreisförmigen Querschnitt mit dem Durchmesser D0, wobei D0 größer ist als D1 und größer ist als D2.

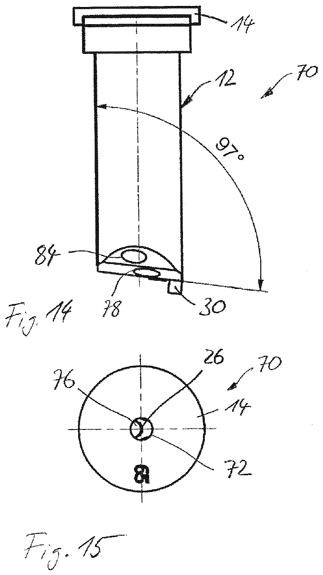

Die Darstellung der Fig. 14 zeigt eine erfindungsgemäße Düse 70 gemäß einer zweiten Ausführungsform der Erfindung. Die Düse 70 zum Ausbringen von Flüssigkeiten, insbesondere Flüssigdünger, ist gegenüber der Düse 10 der Fig. 1 für die Ausgabe größerer Mengen an Flüssigkeit, insbesondere Flüssigdünger, vorgesehen. Im Übrigen ist der Aufbau der Düse 70 prinzipiell gleich zu der Düse 10 der Fig. 1. Gleiche Elemente der Düsen 10, 70 werden daher mit den gleichen Bezugszeichen bezeichnet und in der Regel nicht erneut erläutert. Erörtert werden lediglich die zur Düse 10 der Fig. 1 unterschiedlichen Merkmale.

Es ist bereits in der Fig. 14 zu erkennen, dass die beiden in Fig. 14 erkennbaren Austrittsöffnungen 78, 84 einen größeren Durchmesser haben als die Austrittsöffnungen 18, 24 der Düse 10 der Fig. 1. Darüber hinaus ist zu erkennen, dass die Austrittsöffnungen 78, 84 einen elliptischen Querschnitt aufweisen.

Fig. 15 zeigt eine Draufsicht auf die Düse 70 der Fig. 14. Die Blende 14 ist mit einer Durchtrittsöffnung 72 versehen, die gegenüber der Durchtrittsöffnung 32 der Düse 10 der Fig. 1 und 2 einen größeren Durchmesser aufweist.

Es ist in Fig. 15 zu erkennen, in der der Blick parallel zur Längsachse 26 der Austrittskammer in die Austrittskammer hinein geht, dass eine erste Austrittsöffnung 76 des Gehäuses 12 gegenüber der Durchtrittsöffnung 72 in der Blende 14 versetzt ist. Die erste Austrittsöffnung 76 ist lediglich abschnittsweise durch die Durchtrittsöffnung 72 hindurch zu erkennen. Hierdurch wird das Durchschießen eines mittels der Durchtrittsöffnung 72 erzeugten Flüssigkeitsstrahls vermieden.

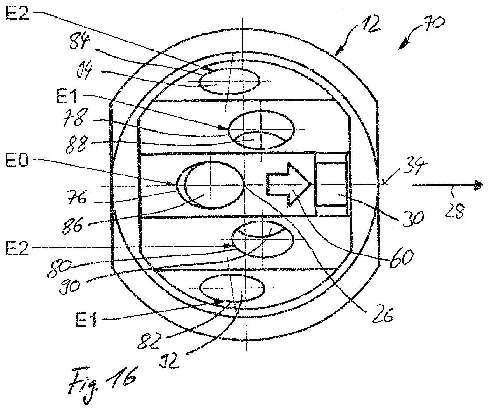

Fig. 16 zeigt die Düse 70 der Fig. 14 in einer Ansicht von unten. Die Düse 70 weist insgesamt fünf Austrittsöffnungen 76, 78, 80, 82, 84 auf, die alle einen elliptischen Querschnitt aufweisen. Bei allen Austrittsöffnungen 76, 78, 80, 82, 84 ist die längere Halbachse des elliptischen Querschnitts parallel zur vorgesehenen Bewegungsrichtung 28 angeordnet. Auf diese Weise können große freie Querschnitte und damit große ausgegebene Flüssigkeitsmengen erreicht werden, ohne dass der von der Düse 70 insgesamt erzeugte Sprühfächer breiter wird als der von der Düse 10 der Fig. 1 erzeugte Sprühfächer.

Die erste Austrittsöffnung 46 ist am Ende eines ersten Austrittskanals 86 angeordnet, dessen Längsachse in der Mittelebene 34 liegt, wobei die Längsachse um einen Winkel zwischen 4° und 10°, insbesondere 7°, gegenüber der Längsachse 26 der Austrittskammer entgegen der vorgesehenen Bewegungsrichtung 28 nach hinten geneigt ist. Der erste Austrittskanal 86 weist einen freien Querschnitt E0 auf.

Die zweite Austrittsöffnung 78 ist am Ende eines zweiten Austrittskanals 88 angeordnet, dessen Längsachse um einen zweiten Winkel zur Mittelebene 34 und zusätzlich um einen Winkel zwischen 4° und 10°, insbesondre 7°, gegenüber der Längsachse 26 entgegen der Bewegungsrichtung 28 nach hinten geneigt ist. Der zweite Austrittskanal 88 weist einen freien Querschnitt E1 auf.

Die dritte Austrittsöffnung 80 ist am Ende eines dritten Austrittskanals 90 angeordnet, der um einen dritten Winkel zur Mittelebene 34 und zusätzlich um einen Winkel von 4° bis 10°, insbesondere 7°, zur Längsachse 26 entgegen der Bewegungsrichtung 28 geneigt ist. Der dritte Winkel ist gleich groß wie der zweite Winkel, vorzeichenmäßig aber verschieden. Der zweite Austrittskanal 88 und der dritte Austrittskanal 90 sind somit symmetrisch zur Mittelebene 34 angeordnet. Der dritte Austrittskanal 90 weist einen freien Querschnitt E2 auf, der kleiner ist als der freie Querschnitt E1 des zweiten Austrittskanals 88. Die Längsachsen des zweiten Austrittskanals 88 und des dritten Austrittskanals 90 verlaufen somit symmetrisch zur Mittelebene 34, aus dem zweiten Austrittskanal 88 wird aber eine größere Flüssigkeitsmenge ausgegeben als aus dem dritten Austrittskanal 90. Der freie Querschnitt E0 des ersten Austrittskanals 86 ist größer als der freie Querschnitt E1 des zweiten Austrittskanals 88 und größer als der freie Querschnitt E2 des dritten Austrittskanals 90. Der freie Querschnitt E1 ist größer als der freie Querschnitt E2.

Die vierte Austrittsöffnung 82 ist am Ende eines vierten Austrittskanals 92 angeordnet, der in einem vierten Winkel zur Mittelebene 34 und zusätzlich um einen Winkel zwischen 4° und 10°, insbesondere 7°, zur Längsachse 26 entgegen der Bewegungsrichtung 28 geneigt ist. Der vierte Austrittskanal 92 weist einen freien Querschnitt E1 auf, der dem freien Querschnitt E1 des zweiten Austrittskanals 88 entspricht.

Die fünfte Austrittsöffnung 44 ist am Ende eines fünften Austrittskanals 94 angeordnet, dessen Längsachse in einem fünften Winkel zur Mittelebene 34 und zusätzlich um einen Winkel zwischen 4° und 10°, insbesondere 7°, zur Längsachse 26 entgegen der Bewegungsrichtung 28 geneigt ist. Die Längsachsen des vierten Austrittskanals 92 und des fünften Austrittskanals 94 sind somit symmetrisch zur Mittelebene 34 angeordnet. Der freie Querschnitt E2 des fünften Austrittskanals 94 ist aber kleiner als der freie Querschnitt E1 des vierten Austrittskanals 92, so dass aus dem fünften Austrittskanal 94 im Betrieb der Düse 70 somit eine kleinere Flüssigkeitsmenge ausgegeben wird als aus dem vierten Austrittskanal 92. Das Spritzbild der Düse 70 ist somit nicht symmetrisch zu einer Ebene, die die Mittellängsachse 26 und die vorgesehene Bewegungsrichtung 28 enthält. Alle Austrittskanäle 86, 88, 90, 92, 94 haben einen elliptischen Querschnitt.

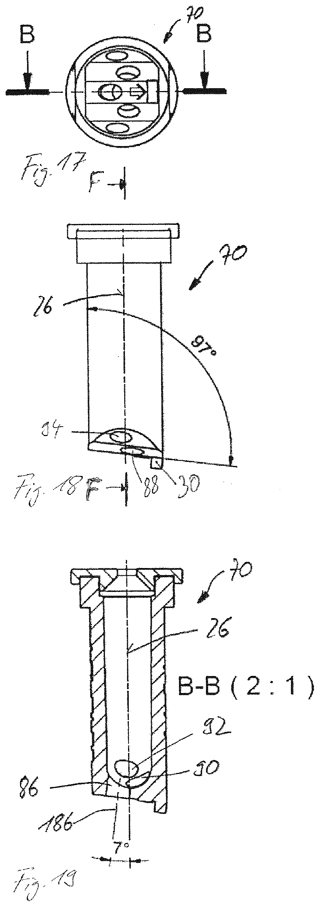

Fig. 17 zeigt die Düse 70 der Fig. 14 in einer der Fig. 16 entsprechenden Ansicht, wobei zusätzlich eine Schnittebene B-B eingezeichnet ist, die die vorgesehene Bewegungsrichtung der Düse 70 sowie die Mittellängsachse 26 der Düse 70 enthält und die im Betrieb der Düse 70 senkrecht zu einer Bodenoberfläche angeordnet ist.

Fig. 18 zeigt eine der Fig. 14 entsprechende Seitenansicht der Düse 70, wobei zusätzlich eine Schnittebene C-C eingezeichnet ist. Die Schnittebene C-C enthält die Mittellängsachse 26 der Düse 70 und ist senkrecht zu einer vorgesehenen Bewegungsrichtung der Düse 70 und im Betrieb der Düse 70 senkrecht zu einer Bodenoberfläche angeordnet.

Fig. 19 zeigt eine Ansicht auf die Schnittebene B-B in Fig. 17. Zu erkennen ist der Austrittskanal 86, dessen Längsachse 186 gegenüber der Mittellängsachse 26 um 7° im Uhrzeigersinn geneigt ist. Dies gilt auch für die Längsachsen der übrigen Austrittskanäle 88, 90, 92, 94, wobei in der Darstellung der Fig. 19 lediglich die Austrittskanäle 90, 92 abschnittsweise zu erkennen sind.

Die Sprühstrahlen treten aus den fünf Austrittsöffnungen 76, 78, 80, 82, 84 der Düse 70 somit um 7° entgegen der Vertikalen nach hinten geneigt aus, bezogen auf eine vorgesehene Bewegungsrichtung 28 der Düse 70. Dies bewirkt, dass die Sprühstrahlen bei üblichen Abständen der Düsen 70 von einer Bodenoberfläche etwa senkrecht auf die Bodenoberfläche auftreffen.

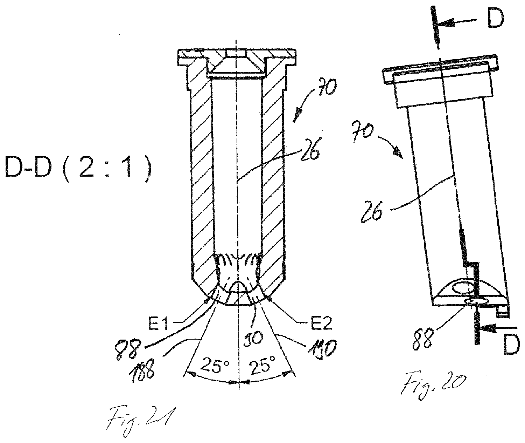

Fig. 20 zeigt eine Seitenansicht der Düse 70, die um 7° entgegen dem Uhrzeigersinn zur Vertikalen geneigt ist. In Fig. 20 eingezeichnet ist ein Schnittverlauf D-D. Der Schnittverlauf D-D folgt, von oben her gesehen, zunächst der Mittellängsachse 26, weist dann aber eine Stufe auf, um dann so zu verlaufen, dass er die Längsachsen der Austrittskanäle 88, 90 enthält, wobei der Austrittskanal 90 in Fig. 20 nicht zu erkennen ist.

Fig. 21 zeigt eine Ansicht auf den Schnittverlauf D-D. Zu erkennen ist, dass die Längsachse 188 des Austrittskanals 88 um 25° im Uhrzeigersinn zur Mittellängsachse 26 geneigt ist und dass die Längsachse 190 des Austrittskanals 90 um 25° gegen den Uhrzeigersinn zur Mittellängsachse 26 geneigt ist. Weiter ist zu erkennen, dass der Austrittskanal 80 einen Querschnitt E1 aufweist, der, wie bereits beschrieben wurde, elliptisch ist, und dass der Austrittskanal 90 einen ebenfalls elliptischen Querschnitt E2 aufweist. Der Querschnitt E2 ist kleiner als der Querschnitt E1. Im Betrieb wird aus dem Austrittskanal 90 somit eine kleinere Flüssigdüngermenge austreten als aus dem Austrittskanal 88. Das Sprühbild der Düse 70 ist somit nicht symmetrisch zu einer Mittelebene, die die Mittellängsachse 26 und die vorgesehene Bewegungsrichtung 28 der Düse 70 enthält.

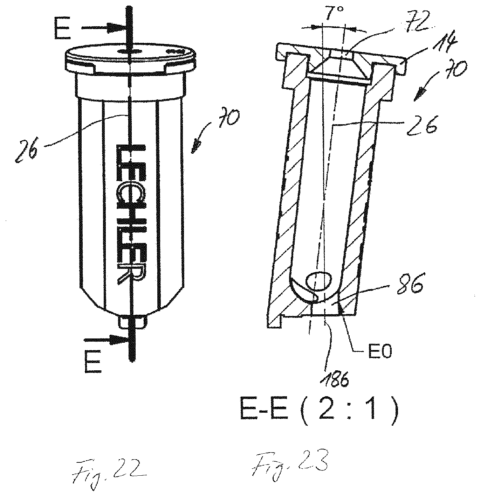

Fig. 22 zeigt eine Ansicht der Düse 70 von hinten, also in der vorgesehenen Bewegungsrichtung. In Fig. 14 wäre dies die Ansicht auf die Düse 70 von links her. In Fig. 22 ist eine Schnittebene E-E eingezeichnet, die die vorgesehene Bewegungsrichtung und die Mittellängsachse 26 der Düse 70 enthält und die im Betrieb der Düse 70 senkrecht zu einer Bodenoberfläche ist.

Fig. 23 zeigt eine Ansicht auf die Schnittebene E-E in Fig. 22. Die Mittellängsachse 26 ist um 7° im Uhrzeigersinn zur Vertikalen gekippt, so dass eine Längsachse 186 des Austrittskanals 86 in Fig. 23 senkrecht nach unten verläuft. Der Austrittskanal 86 weist einen elliptischen Querschnitt E0 auf, der größer ist als der Querschnitt E1 und der größer ist als der Querschnitt E2.

In Fig. 23 zu erkennen ist die Ausbildung der Blende 14, die sich von der Blende 14 der Düse 10 aber lediglich durch eine im Querschnitt größere Durchtrittsöffnung 72 unterscheidet. Der Durchmesser der kreisrunden Durchtrittsöffnung 72 entspricht dem oberen, kleineren Durchmesser der darauffolgenden kegelstumpfförmigen Ausnehmung, die sich bis auf den Durchmesser der Austrittskammer erweitert.

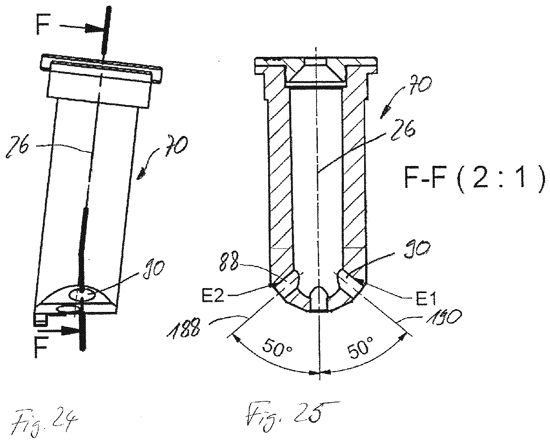

Fig. 24 zeigt eine Seitenansicht der Düse 70, die gegenüber der Seitenansicht der Fig. 14 um 7° im Uhrzeigersinn zur Vertikalen gekippt ist. In Fig. 24 ist ein Schnittverlauf F-F eingezeichnet. Der Schnittverlauf F-F folgt zunächst der Mittellängsachse 26 der Düse 70, knickt dann aber ab, so dass der Schnittverlauf F-F die Längsachsen der Austrittskanäle 90, 88 enthält, wobei der Austrittskanal 88 in Fig. 24 nicht zu erkennen ist.

Fig. 25 zeigt eine Ansicht auf den Schnittverlauf F-F in Fig. 24. Zu erkennen ist, dass die Längsachse 188 des Austrittskanals 88 in einem Winkel von -50°, also im Uhrzeigersinn, zur Mittellängsachse 26 der Düse 70 angeordnet ist. Die Längsachse 190 des Austrittskanals 90 ist gegenüber der Mittellängsachse 26 um einen Winkel von +50°, also entgegen dem Uhrzeigersinn, geneigt. Der Austrittskanal 88 weist einen elliptischen Querschnitt E2 auf und der Austrittskanal 90 weist einen elliptischen Querschnitt E1 auf. Der Querschnitt E1 ist größer als der Querschnitt E2. Im Betrieb der Düse 70 wird somit aus dem Austrittskanal 90 eine größere Flüssigkeitsmenge ausgegeben als aus dem Austrittskanal 88. Das Sprühbild der Düse 70 ist somit nicht symmetrisch zu einer Ebene, die die Mittellängsachse 26 enthält und die im Betrieb der Düse 70 die Bewegungsrichtung 28 der Düse enthält und die senkrecht zu einer Bodenoberfläche angeordnet ist.

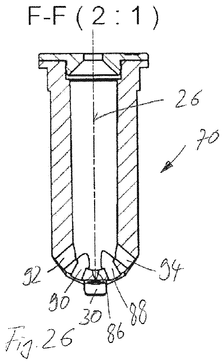

Fig. 26 zeigt eine Ansicht auf die Schnittebene F-F in Fig. 18. Es ist anhand der Fig. 18 zu erkennen, dass die Schnittebene F-F die Austrittskanäle 88 und 94 schneidet, allerdings nicht in deren Mittelachse. Die Austrittskanäle 88 und 94 verlaufen ja um 7° zur Mittellängsachse 26 geneigt, vergleiche auch die Fig. 17 und 19. Die Schnittansicht der Fig. 26 zeigt daher nur einen Abschnitt der Austrittskanäle 88, 94 sowie auch 90 und 92. Der Austrittskanal 86 ist nur mit einem sehr kleinen Anschnitt in der Darstellung der Fig. 26 zu erkennen. In Fig. 26 zu erkennen ist, dass der freie Querschnitt der Austrittskanäle 88 und 90 unterschiedlich groß ist. Die Austrittskanäle 88 und 90 sind zwar unter dem gleichen Winkel relativ zur Mittelachse 26 geneigt, der Austrittskanal 88 hat aber einen freien Querschnitt E1, wohingegen der Austrittskanal 90 einen freien Querschnitt E2 hat und wobei der Querschnitt E1 größer ist als der Querschnitt E2.

Auch die beiden Austrittskanäle 92, 94 sind in Bezug auf die Ausrichtung ihrer jeweiligen Mittellängsachse symmetrisch zur Mittellängsachse 26 angeordnet, sie weisen aber einen unterschiedlichen Querschnitt auf. Der Austrittskanal 92 hat einen freien Querschnitt E1 und der Austrittskanal 94 hat einen freien Querschnitt E2, wobei E1 größer ist als E2.

## Patentansprüche

1. Düse (10; 70) zum Ausbringen von Flüssigkeiten, insbesondere Flüssigdünger, mit einem Gehäuse (12) mit einem Flüssigkeitseinlass, einer Austrittskammer und mindestens einem ersten Austrittskanal (36; 86), einem zweiten Austrittskanal (38; 88) und einem dritten Austrittskanal (40; 90), wobei die Austrittskanäle von der Austrittskammer ausgehen, wobei eine Längsachse (136; 186) des ersten Austrittskanals (36; 86) in einer
Mittelebene des Gehäuses (12) liegt, wobei eine Längsachse (138; 188) des zweiten Austrittskanals (38; 88) in einem zweiten Winkel zur Mittelebene angeordnet ist, wobei eine Längsachse (140; 190) des dritten Austrittskanals (40; 90) in einem dritten, zum zweiten Winkel betragsmäßig gleichen aber vorzeichenmäßig verschiedenen Winkel zur Mittelebene angeordnet ist,
wobei ein freier Querschnitt des zweiten Austrittskanals (38; 88) und ein freier Querschnitt des dritten Austrittskanals (40; 90) unterschiedlich sind, so dass im Betrieb der Düse (10; 70) aus dem zweiten Austrittskanal (38; 88) und dem dritten Austrittskanal (40; 90) unterschiedliche Flüssigkeitsmengen ausgegeben werden, und
**dadurch gekennzeichnet, dass** alle
Austrittskanäle (36, 38, 10, 42, 44; 86, 88, 90, 92, 94), senkrecht zur Mittelebene gesehen um einen sechsten Winkel zwischen 4 Grad und 10 Grad, insbesondere sieben Grad, gegenüber der Mittellängsachse (26) des Gehäuses (12) geneigt sind, wobei alle Austrittskanäle (36, 38, 10, 42, 44; 86, 88, 90, 92, 94) in Bezug auf die Vertikale und eine vorgesehene Bewegungsrichtung (28) im Sprühbetrieb der Düse um den sechsten Winkel nach hinten geneigt sind.

2. Düse nach Anspruch 1, **dadurch gekennzeichnet, dass** ein vierter Austrittskanal (42; 92) und ein fünfter Austrittskanal (44; 94) vorgesehen sind, die von der Austrittskammer ausgehen, wobei eine Längsachse (142; 192) des vierten Austrittskanals (42; 92) in einem vierten Winkel zur Mittelebene angeordnet ist, wobei eine Längsachse (144; 194) des fünften Austrittskanals (44; 94) in einem fünften Winkel zur Mittelebene angeordnet ist, wobei der vierte und der fünfte Winkel vom zweiten und dritten Winkel verschieden sind, wobei der vierte Winkel und der fünfte Winkel betragsmäßig gleich aber vorzeichenmäßig verschieden sind, und wobei ein freier Querschnitt des vierten Austrittskanals (42; 92) und ein freier Querschnitt des fünften Austrittskanals (44; 94) unterschiedlich sind, so dass im Betrieb der Düse aus dem vierten Austrittskanal (42; 92) und dem fünften Austrittskanal (44; 94) unterschiedliche Flüssigkeitsmengen ausgegeben werden.

3. Düse nach Anspruch 2, **dadurch gekennzeichnet, dass** der freie Querschnitt des zweiten Austrittskanals (38; 88) und des vierten Austrittskanals (42; 92) gleich sind und dass der freie Querschnitt des dritten Austrittskanals (40; 90) und des fünften Austrittskanals (44; 94) gleich sind, so dass im Betrieb der Düse aus dem zweiten Austrittskanal (38; 88) und dem vierten Austrittskanal (42; 92) gleiche Flüssigkeitsmengen ausgegeben werden und dass aus dem dritten Austrittskanal (40; 90) und dem fünften Austrittskanal (44; 94) gleiche Flüssigkeitsmengen ausgegeben werden.

4. Düse nach einem der vorstehenden Ansprüche, **dadurch gekennzeichnet, dass** in der Austrittskammer eine Blende (14) mit wenigstens einer Durchtrittsöffnung (32; 72) angeordnet ist und dass der Beginn des ersten Austrittskanals (36; 86) gegenüber der Durchtrittsöffnung (32; 72) in Strömungsrichtung durch die Austrittskammer gesehen versetzt ist.

5. Düse nach wenigstens einem der vorstehenden Ansprüche, **dadurch gekennzeichnet, dass** das Gehäuse (12) an seinem unteren Ende, an dem die Austrittskanäle in die Umgebung münden, mit einem in einer vorgesehenen Bewegungsrichtung (28) vorne liegenden Vorsprung (30) versehen ist, der etwa in Richtung der Mittellängsachse (26) der Austrittskammer von dem Gehäuse (12) abragt.

6. Düse nach wenigstens einem der vorstehenden Ansprüche, **dadurch gekennzeichnet, dass** ein Querschnitt wenigstens eines der Austrittskanäle (86, 88, 90, 92, 94) elliptisch ist.

7. Düse nach Anspruch 6, **dadurch gekennzeichnet, dass** eine längere Halbachse der Ellipse parallel zu der vorgesehenen Bewegungsrichtung (28) der Düse (10; 70) angeordnet ist.

8. Landwirtschaftliche Spritzvorrichtung mit mehreren Düsen (10; 70) nach wenigstens einem der vorstehenden Ansprüche, **dadurch gekennzeichnet, dass** die Austrittskanäle (36, 38, 10, 42, 44; 86, 88, 90, 92, 94) gegenüber einer Vorwärtsfahrrichtung der Spritzvorrichtung um einen Winkel zwischen 4 Grad und 10 Grad, insbesondere 7 Grad, zur Vertikalen nach hinten geneigt sind.

## Claims

1. Nozzle (10; 70) for dispersing liquids, in particular liquid fertilizer, having a housing (12) having a liquids inlet, an exit chamber, and at least a first exit duct (36; 86), a second exit duct (38; 88), and a third exit duct (40; 90), wherein the exit ducts proceed from the exit chamber, wherein a longitudinal axis (136; 186) of the first exit duct (36; 86) lies in a central plane of the housing (12), wherein a longitudinal axis (138; 188) of the second exit duct (38; 88) is disposed at a second angle to the central plane, wherein a longitudinal axis (140; 190) of the third exit duct (40; 90) is disposed at a third angle to the central plane, said third angle in terms of the value being identical to the second angle but in terms of the algebraic sign being different therefrom, wherein a free cross section of the second exit duct (38; 88) and a free cross section of the third exit duct (40; 90) are dissimilar such that in the operation of the nozzle (10; 70) dissimilar quantities of liquid are discharged from the second exit duct (38; 88) and the third exit duct (40; 90), **characterized in that** all exit ducts (36, 38, 10, 42, 44; 86, 88, 90, 92, 94), when viewed perpendicularly to the central plane, are inclined by a sixth angle between 4 degrees and 10 degrees, in particular seven degrees, in relation to the central longitudinal axis (26) of the housing (12), wherein all exit ducts (36, 38, 10, 42, 44; 86, 88, 90, 92, 94) in the spraying operation of the nozzle in relation to the vertical and to an envisaged direction of movement (28) are inclined towards the rear by the sixth angle.

2. Nozzle according to Claim 1, **characterized in that** a fourth exit duct (42; 92) and a fifth exit duct (44; 94) which proceed from the exit chamber are provided, wherein a longitudinal axis (142; 192) of the fourth exit duct (42; 92) is disposed at a fourth angle to the central plane, wherein a longitudinal axis (144; 194) of the fifth exit duct (44; 94) is disposed at a fifth angle to the central plane, wherein the fourth angle and the fifth angle are different from the second and the third angle, wherein the fourth angle and the fifth angle in terms of the value are identical but in terms of the algebraic sign are different, and wherein a free cross section of the fourth exit duct (42; 92) and a free cross section of the fifth exit duct (44; 94) are dissimilar such that in the operation of the nozzle dissimilar quantities of liquid are discharged from the fourth exit duct (42; 92) and the fifth exit duct (44; 94) .

3. Nozzle according to Claim 2, **characterized in that** the free cross section of the second exit duct (38; 88) and of the fourth exit duct (42; 92) are identical, and **in that** the free cross section of the third exit duct (40; 90) and of the fifth exit duct (44; 94) are identical such that in the operation of the nozzle identical quantities of liquid are discharged from the second exit duct (38; 88) and the fourth exit duct (42; 92), and that identical quantities of liquid are discharged from the third exit duct (40; 90) and the fifth exit duct (44; 94) .

4. Nozzle according to one of the preceding claims, **characterized in that** an aperture (14) having at least one passage opening (32; 72) is disposed in the exit chamber, and **in that** the beginning of the first exit duct (36; 86), when viewed in the flow direction through the exit chamber, is offset in relation to the passage opening (32; 72).

5. Nozzle according to at least one of the preceding claims, **characterized in that** the housing (12) at the lower end thereof where the exit ducts open into the environment is provided with a protrusion (30) which in an envisaged direction of movement (28) lies in front and which protrudes from the housing (12) approximately in the direction of the central longitudinal axis (26) of the exit chamber.

6. Nozzle according to at least one of the preceding claims, **characterized in that** a cross section of at least one of the exit ducts (86, 88, 90, 92, 94) is elliptic.

7. Nozzle according to Claim 6, **characterized in that** a major of the semi-axes of the ellipse is disposed so as to be parallel with the envisaged direction of movement (28) of the nozzle (10; 70).

8. Agricultural spray device having a plurality of nozzles (10; 70) according to at least one of the preceding claims, **characterized in that** the exit ducts (36, 38, 10, 42, 44; 86, 88, 90, 92, 94) in relation to a forward travel direction of the spray device are inclined towards the rear at an angle between 4 degrees and 10 degrees, in particular 7 degrees, to the vertical.

## Revendications

1. Buse (10 ; 70) pour distribuer des liquides, notamment de l'engrais liquide, avec un boîtier (12) avec une entrée de liquide, une chambre de sortie et au moins un premier canal de sortie (36 ; 86), un deuxième canal de sortie (38 ; 88) et un troisième canal de sortie (40 ; 90), les canaux de sortie partant de la chambre de sortie, un axe longitudinal (136 ; 186) du premier canal de sortie
(36 ; 86) se situant dans un plan médian du boîtier (12), un axe longitudinal (138 ; 188) du deuxième canal de sortie (38 ; 88)
étant agencé à un deuxième angle par rapport au plan médian, un axe longitudinal (140 ; 190) du troisième canal de sortie (40 ; 90) étant agencé à un troisième angle par rapport au plan médian, égal en valeur absolue au deuxième angle, mais différent en signe, une section transversale libre du deuxième canal de sortie (38 ; 88) et une section transversale libre du troisième canal de sortie (40 ; 90) étant différentes, de telle sorte que, pendant le fonctionnement de la buse (10 ; 70), des quantités de liquide différentes sont distribuées à partir du deuxième canal de sortie (38 ; 88) et du troisième canal de sortie (40 ; 90), et **caractérisée en ce que** tous
les canaux de sortie (36, 38, 10, 42, 44 ; 86, 88, 90, 92, 94), vus perpendiculairement au plan médian, sont inclinés par rapport à l'axe longitudinal médian (26) du boîtier (12) d'un sixième angle compris entre 4 degrés et 10 degrés, notamment sept degrés, tous les canaux de sortie (36, 38, 10, 42, 44 ; 86, 88, 90, 92, 94) étant inclinés vers l'arrière du sixième angle par rapport à la verticale et à une direction de déplacement prévue (28) dans le mode de pulvérisation de la buse.

2. Buse selon la revendication 1, **caractérisée en ce qu'**il est prévu un quatrième canal de sortie (42 ; 92) et un cinquième canal de sortie (44 ; 94) qui partent de la chambre de sortie, un axe longitudinal (142 ; 192) du quatrième canal de sortie (42 ; 92) étant agencé à un quatrième angle par rapport au plan médian, un axe longitudinal (144 ; 194) du cinquième canal de sortie (44 ; 94) étant agencé à un cinquième angle par rapport au plan médian, les quatrième et cinquième angles étant différents des deuxième et troisième angles, le quatrième angle et le cinquième angle étant égaux en valeur absolue mais différents en signe, et une section transversale libre du quatrième canal de sortie (42 ; 92) et une section transversale libre du cinquième canal de sortie (44 ; 94) étant différentes, de telle sorte que, pendant le fonctionnement de la buse, des quantités de liquide différentes sont distribuées à partir du quatrième canal de sortie (42 ; 92) et du cinquième canal de sortie (44 ; 94) .

3. Buse selon la revendication 2, **caractérisée en ce que** la section transversale libre du deuxième canal de sortie (38 ; 88) et du quatrième canal de sortie (42 ; 92) sont identiques et **en ce que** la section transversale libre du troisième canal de sortie (40 ; 90) et du cinquième canal de sortie (44 ; 94) sont identiques, de telle sorte que, pendant le fonctionnement de la buse, des quantités de liquide égales sont distribuées à partir du deuxième canal de sortie (38 ; 88) et du quatrième canal de sortie (42 ; 92) et que des quantités de liquide égales sont distribuées à partir du troisième canal de sortie (40 ; 90) et du cinquième canal de sortie (44 ; 94) .

4. Buse selon l'une quelconque des revendications précédentes, **caractérisée en ce qu'**un diaphragme (14) avec au moins une ouverture de passage (32 ; 72) est agencé dans la chambre de sortie et **en ce que** le début du premier canal de sortie (36 ; 86), vu dans la direction d'écoulement à travers la chambre de sortie, est décalé par rapport à l'ouverture de passage (32 ; 72).

5. Buse selon au moins l'une quelconque des revendications précédentes, **caractérisée en ce que** le boîtier (12) est pourvu, à son extrémité inférieure où les canaux de sortie débouchent dans l'environnement, d'une saillie (30) située à l'avant dans une direction de déplacement prévue (28), qui fait saillie du boîtier (12) approximativement dans la direction de l'axe longitudinal médian (26) de la chambre de sortie.

6. Buse selon au moins l'une quelconque des revendications précédentes, **caractérisée en ce qu'**une section transversale d'au moins l'un des canaux de sortie (86, 88, 90, 92, 94) est elliptique.

7. Buse selon la revendication 6, **caractérisée en ce qu'**un demi-axe plus long de l'ellipse est agencé parallèlement à la direction de déplacement prévue (28) de la buse (10 ; 70).

8. Pulvérisateur agricole à plusieurs buses (10 ; 70) selon au moins l'une quelconque des revendications précédentes, **caractérisé en ce que** les canaux de sortie (36, 38, 10, 42, 44 ; 86, 88, 90, 92, 94) sont inclinés vers l'arrière par rapport à une direction d'avancement du pulvérisateur d'un angle compris entre 4 degrés et 10 degrés, notamment 7 degrés, par rapport à la verticale.
